# EUROPÄISCHE PATENTSCHRIFT

(11) **EP 4 013 719 B1**
(45) Veröffentlichungstag und Bekanntmachung des Hinweises auf die Patenterteilung: **16.07.2025**
(21) Anmeldenummer: 20742708.9
(22) Anmeldetag: 16.07.2020
(51) Int. Cl.: C01B 32/55, F25C 5/02, F25C 5/20, F25D 3/12

(54) **VORRICHTUNG ZUM DOSIEREN VON KOHLENDIOXIDSCHNEE**
DEVICE FOR METERING CARBON DIOXIDE SNOW
DISPOSITIF DE MESURE DE NEIGE CARBONIQUE

(30) Priorität: 16.08.2019 DE 102019005745
(43) Veröffentlichungstag der Anmeldung: 22.06.2022
(73) Patentinhaber: Messer SE & Co. KGaA, 65812 Bad Soden (DE)
(72) Erfinder: TEBIB, Emir, 60330 Le Plessis Belleville (FR); SCHIRMACHER, Johanna, 47877 Willich (DE)
(74) Vertreter: Münzel, Joachim R.
(86) Internationale Anmeldenummer: PCT/EP2020/070163
(87) Internationale Veröffentlichungsnummer: WO 2021/032377

(56) Entgegenhaltungen:
- EP-A1- 0 302 285
- DE-A1- 102016 003 800
- DE-A1- 102017 008 488
- DE-A1- 3 200 346

## Beschreibung

Die Erfindung betrifft eine Vorrichtung zum Dosieren von Kohlendioxidschnee, mit einem Vorlagebehälter, in den eine Zuführung für Kohlendioxidschnee sowie eine Gasabzugsleitung zum Abführen von Kohlendioxidgas einmünden und der mit einer Ausgabeeinheit zum dosierten Abgeben von Kohlendioxidschnee ausgerüstet ist, wobei die Ausgabeeinheit eine im Bereich eines Dosierabschnitts des Vorlagebehälters seitlich angeordnete Ausgabeöffnung und ein mit der Ausgabeöffnung zusammenwirkendes, horizontal bewegliches Schiebeelement zum Hinausschieben von im Dosierabschnitt befindlichem Kohlendioxidschnee durch die Ausgabeöffnung umfasst.

Zur Erzeugung von Kohlendioxidschnee kommen sogenannte Schneehörner zum Einsatz. Im Sinne der vorliegenden Erfindung handelt es sich dabei um Vorrichtungen, bei denen die Erzeugung von Kohlendioxidschnee durch Entspannen von flüssigem Kohlendioxid unter Ausnutzung des Joule-Thomson-Effekts erfolgt. Das Schneehorn umfasst dabei ein Entspannungsorgan in Form einer Düse, die üblicherweise im Kopfabschnitt des Schneehorns oberhalb eines senkrecht angeordneten Trichters angeordnet ist. Unter Druck stehendes, flüssiges Kohlendioxid wird an der Entspannungsdüse auf einen Druck von unter 5,18 bar entspannt, wobei ein Gemisch aus Kohlendioxidgas und Kohlendioxidschnee entsteht. Der Kohlendioxidschnee fällt im Trichter unter der Wirkung der Schwerkraft nach unten, und wird direkt auf ein zu kühlendes Produkt aufgetragen oder kann gesammelt und einer weiteren Verwendung zugeführt werden. Beim Einsatz derartiger Schneehörner führen jedoch starke turbulente Strömungen, die bei der Entspannung des flüssigen Kohlendioxids erzeugt werden, zu einer intensiven Durchmischung von Gas und Schneeteilchen mit der Folge, dass ein erheblicher Teil der Schneepartikel vom Gas mitgerissen wird und nicht leicht von diesem zu trennen ist.

Kohlendioxidschnee wird insbesondere zum Kühlen von Produkten eingesetzt, die in mobilen Behältern transportiert werden. Dabei werden die zu kühlenden Produkte während des Transports in einem thermisch gut isolierten Kühlfach gelagert, das mit einem mit Kohlendioxidschnee befüllten Kältemittel-Aufnahmefach in thermischer Verbindung steht. Derartige mobile Transportbehälter sind beispielsweise aus der EP 0 942 244 A1 oder der EP 3 246 642 A1 bekannt. Zum Befüllen des Kältemittel-Aufnahmefachs mit Kohlendioxidschnee wird dieses mit einer Zuführeinrichtung verbunden, wie sie beispielsweise in der EP 1 088 191 A1 oder der WO 2017 016 999 A1 beschrieben wird. Die Zuführeinrichtung injiziert flüssiges, unter Druck stehendes Kohlendioxid in das Kältemittel-Aufnahmefach, das dort entspannt und in ein Gemisch aus Kohlendioxidgas und Kohlendioxidschnee übergeht. Während der Kohlendioxidschnee im Kältemittel-Aufnahmefach zurückgehalten wird, wird das entstehende Gas abgesaugt. Anschließend wird die Zuführeinrichtung vom Kältemittel-Aufnahmefach abgekoppelt und steht zur Befüllung des nächsten Kältemittel-Aufnahmefachs zur Verfügung. Dieser Vorgang ist allerdings sehr zeit- und arbeitsaufwändig und kaum geeignet, in einer kurzen Zeit eine große Anzahl an Kältemittel-Aufnahmefächern mit Kohlendioxidschnee zu befüllen.

Aus der DE 10 2017 008 488 A1 ist eine Vorrichtung zum Dosieren von Kohlendioxidschnee bekannt, die mit einem Vorlagebehälter mit einer unterseitigen, verschließbaren Ausgabeöffnung für Kohlendioxidschnee ausgerüstet ist. Die Zuführung von Kohlendioxidschnee in den Vorlagebehälter erfolgt über eine mit einer Entspannungsdüse ausgerüstete Zuleitung für flüssiges Kohlendioxid. Beim Entspannen des flüssigen Kohlendioxids entstehendes Kohlendioxidgas wird über eine beabstandet oberhalb der Entspannungsdüse ausmündende Abzugsleitung abgeführt.

Aus der EP 3 222 946 A1 ist eine Vorrichtung zum Dosieren von Kohlendioxidschnee bekannt. Die Vorrichtung weist einen Vorlagebehälter auf, der mittels eines am Vorlagebehälter installierten Schneehorns mit Kohlendioxidschnee gefüllt wird. Das bei der Erzeugung des Kohlendioxidschnees erzeugte Kohlendioxidgas wird über eine Abgasleitung abgeführt. Am Vorlagebehälter ist eine Ausgabeeinheit angeordnet, die eine im Bodenbereich des Vorlagebehälters seitlich angeordnete Ausgabeöffnung und ein mit der Ausgabeöffnung zusammenwirkendes, horizontal bewegliches Schiebeelement umfasst. Das Schiebeelement ist zwischen einer ersten, die Ausgabeöffnung sowie einen Dosierabschnitt des Vorlagebehälters verschließenden ersten Position und einer den Dosierabschnitt und die Ausgabeöffnung freigebenden zweiten Position bewegbar. Durch Betätigung des Schiebeelements kann ein genau bestimmtes Volumen an Kohlendioxidschnee über die Ausgabeöffnung ausgestoßen werden.

Die aus der EP 3 222 946 A1 bekannte Vorrichtung hat sich bewährt, ist jedoch insofern noch verbesserungswürdig, als bei der Erzeugung des Kohlendioxidschnees durch Entspannen von flüssigem Kohlendioxid ein nicht unerheblicher Teil des Schnees vom Strom des abgeführten Kohlendioxidgases mitgerissen wird. Dieser Teil steht daher nicht mehr für die Kühlaufgabe zur Verfügung, zudem kann, insbesondere bei längeren Betriebsdauern, durch Anbacken von Kohlendioxidschnee oder Festfrieren von Feuchtigkeit die Funktionsfähigkeit des Gasabzugs beeinträchtigt werden.

Aus der DE 32 00 346 A1 ist eine Vorrichtung zur Herstellung von Trockeneisblöcken bekannt. Die Vorrichtung weist eine Pressform auf, in die Kohlendioxidschnee zugeführt und anschließend zu einer Form gepresst wird. Der gepresste Kohlendioxidschnee wird über eine seitliche Ausgabeöffnung mithilfe eines horizontal bewegliches Schiebeelement ausgestoßen. Zur Beschickung des Vorlagebehälters mit Kohlendioxidschnee sind zwei aufeinander zu gerichtete Schneehörner vorgesehen. Das entstehende Gas wird über Entlüftungsöffnungen im Bereich der Schneehörner abgezogen. Um das Mitreißen von Schneepartikeln durch das abziehende Kohlendioxidgas zu vermeiden, weisen die Entlüftungsöffnungen nur eine kleine Querschnittsfläche auf. Dadurch besteht jedoch die Gefahr, dass die Entlüftungsöffnungen im Betrieb der Vorrichtung durch anbackenden Kohlendioxidschnee verstopfen.

Aufgabe der Erfindung ist daher, eine Kohlendioxidschnee durch Entspannen von flüssigem Kohlendioxid erzeugende, wartungsarme Vorrichtung zu schaffen, die in der Lage ist, bei geringen Mengenverlusten in kurzen Zeitabständen genau dosierte Mengen an Kohlendioxidschnee zu produzieren und bereitzustellen.

Gelöst ist diese Aufgabe durch eine Vorrichtung mit den Merkmalen des Patentanspruchs 1. Vorteilhafte Ausgestaltungen sind in den Unteransprüchen angegeben.

Eine Vorrichtung der eingangs genannten Art und Zweckbestimmung ist also dadurch gekennzeichnet, dass wenigstens zwei, jeweils an eine Zuleitung für flüssiges Kohlendioxid angeschlossene und an einer Mündungsöffnung in den Vorlagebehälter einmündende Schneehörner vorgesehen sind, die derart angeordnet sind, dass die aus ihren Mündungsöffnungen in den Vorlagebehälter eintretenden Ströme aus Kohlendioxidschnee und Kohlendioxidgas zumindest in einer Richtungskomponente aufeinander zu gerichtet sind, und die Gasabzugsleitung oberhalb der Mündungsöffnungen der Schneehörner vom Vorlagebehälter abführt und zwischen den Mündungsöffnungen der Schneehörner und der Mündung der Gasabzugsleitung ein Trennabschnitt vorgesehen ist, in dem vom Gasstrom mitgerissene Schneepartikel vom Gas getrennt werden.

Die Schneehörner umfassen jeweils ein Entspannungsvolumen, in das zur Erzeugung eines Stroms aus Kohlendioxidgas und Kohlendioxidschnee die Zuführleitung für flüssiges Kohlendioxid an einer Entspannungsdüse ausmündet. Ihrerseits münden die Schneehörner an jeweils einer Mündungsöffnung in den vertikal angeordneten, beispielsweise rohrförmig oder zylindrisch ausgebildeten Vorlagebehälter bevorzugt auf gleicher Höhe ein.

An den Entspannungsdüsen in den Schneehörnern wird durch Entspannen von zugeführtem, unter Druck stehendem flüssigen Kohlendioxid ein Gemisch aus Kohlendioxidschnee und Kohlendioxidgas erzeugt, das anschließend aus den Schneehörnern in das Innere des Vorlagebehälters einströmt. Die aus den Mündungsöffnungen der Schneehörner austretenden Ströme aus Gemisch aus Kohlendioxidschnee und Kohlendioxidgas treffen im Innern des Vorlagebehälters aufeinander und heben sich in ihren Impulsen zumindest teilweise gegenseitig auf. Dadurch werden Turbulenzen verringert und Schneepartikel vom Gasstrom getrennt. Der Kohlendioxidschnee sinkt im Innern des Vorlagebehälters ab, während das Gas nach oben durch die Gasabzugsleitung abgeführt wird. Die Gasabzugsleitung geht daher oberhalb der Mündungsöffnungen der Schneehörner vom Vorlagebehälter ab; beispielsweise befindet sich die Mündung der Gasabzugsleitung 20-100 cm oberhalb der Mündungsöffnungen der Schneehörner, der dazwischen liegende Abschnitt des Vorlagebehälters dient dabei als Trennabschnitt, in dem vom Gasstrom mitgerissene Schneepartikel vom Gas getrennt werden.

Die Schneehörner können derart am Vorlagebehälter angeordnet sein, dass sie mit ihren Mündungsöffnungen frontal aufeinander zu weisen oder, was im Rahmen der vorliegenden Erfindung bevorzugt ist, in einem spitzen Winkel, mit den Mündungsöffnungen nach unten. Bevorzugt weist der Vorlagebehälter einen rechteckigen oder quadratischen Querschnitt auf, und eine jeweils gleiche Anzahl an Schneehörnern (im einfachsten Fall jeweils ein Schneehorn) ist auf jeweils gleicher Höhe in einander gegenüberliegenden vertikal verlaufenden Seitenwänden des Vorlagebehälters angeordnet. Ein zwischen den Mündungsöffnungen der Schneehörner und der Mündung der Gasabzugsleitung vorliegender Trennabschnitt der oben genannten Art besitzt dabei bevorzugt den gleichen Querschnitt wie der Vorlagebehälter unterhalb der Mündungsöffnungen.

Der auf seiner Unterseite durch einen Boden geschlossene Vorlagebehälter besitzt in seinem unteren Bereich eine Ausgabeeinheit mit einer seitlich angeordneten Ausgabeöffnung und einen sich an diese anschließenden Dosierabschnitt. Beim Dosierabschnitt handelt es sich um ein bodenseitiges Teilvolumen des Vorlagebehälters, das unterhalb der Mündungsöffnungen der Schneehörner angeordnet ist und dessen Größe die Menge des jeweils während eines Arbeitszyklus der Vorrichtung ausgeworfenen Kohlendioxidschnees bestimmt. Die Ausgabeeinheit umfasst neben der Ausgabeöffnung ein mit der Ausgabeöffnung zusammenwirkendes, horizontal bewegliches Schiebeelement, das zwischen einer die Ausgabeöffnung und den Dosierabschnitt des Vorlagebehälters verschließenden ersten Position und einer den Dosierabschnitt und die Ausgabeöffnung freigebenden zweiten Position bewegbar ist.

Beim Schiebeelement handelt es sich beispielsweise um einen in den Dosierabschnitt des Vorlagebehälters einschiebbaren oder in diesen hinein verschwenkbaren Körper aus Kunststoff oder Metall, der einen der Größe und Form der Ausgabeöffnung entsprechenden, als Schiebeschild wirkenden Flächenabschnitt aufweist, mittels dem nach dem Befüllen des Dosierabschnitts mit Kohlendioxidschnee dieser durch die Ausgabeöffnung hindurch aus dem Vorlagebehälter hinausgeschoben werden kann.

Weiterhin weist die Ausgabeeinheit Mittel auf, die den im Dosierabschnitt vorhandenen Kohlendioxidschnee von dem im Vorlagebehälter oberhalb des Dosierabschnitts befindlichen Kohlendioxidschnee abtrennen. Diese Mittel umfassen bevorzugt ein Trennmesser aus Kunststoff oder Metall, das oberhalb des Schiebeelements, jedoch unterhalb der Mündungsöffnungen der Schneehörner angeordnet ist. Das Trennmesser wird bevorzugt unabhängig vom Schiebeelement in horizontaler Richtung bewegt und ist dazu zweckmäßigerweise in seitlichen, horizontal im Innern des Vorlagebehälters angeordneten Führungsschienen aufgenommen. Im Einsatz zerteilt das Trennmesser den im Vorlagebehälter befindlichen Schneekörper knapp oberhalb des Schiebeelements in einer im Wesentlichen horizontalen Ebene. Zugleich hindert das als flächiges Bauteil ausgebildete Trennmesser das Hinabfallen von Kohlendioxidschnee aus den darüber liegenden Abschnitten des Vorlagebehälters in den Dosierabschnitt. Das Trennmesser erleichtert auf diese Weise nicht nur die anschließende Betätigung des Schiebeelements zum Auswerfen des im Dosierabschnitt befindlichen Kohlendioxidschnees, sondern es gewährleistet zudem, dass dabei eine genau definierte Menge an Kohlendioxidschnee ausgeworfen wird.

Durch Verschieben oder Verschwenken des Trennmessers sowie des Schiebeelements in eine Öffnungsposition seitlich zum Innenraum des Vorlagebehälters wird der Dosierabschnitt freigegeben, und Kohlendioxidschnee, der sich innerhalb des Vorlagebehälters oberhalb des Trennmessers befunden hatte, fällt in den Dosierabschnitt hinein. Durch eine erneute Betätigung von Trennmesser und Schiebeelement, diesmal zurück aus der Öffnungsposition in die jeweilige Schließposition, wird der innerhalb des Dosierabschnitts befindliche Kohlendioxidschnee vom übrigen Kohlendioxidschnee abgetrennt und mittels des Schiebeelements durch die Ausgabeöffnung hindurch aus dem Vorlagebehälter hinausgestoßen und seiner weiteren Verwendung zugeführt.

Der aus der Ausgabeöffnung herausgestoßene Kohlendioxidschnee bildet aufgrund anziehender Kräfte zwischen den Schneepartikeln einen Schneekörper mit einer beträchtlichen Formstabilität, der als Ganzes mittels geeigneter Fördermittel, beispielsweise eine Rutsche, eine Zuführrinne und/oder ein Förderband, zumindest über eine kurze Distanz transportiert werden kann. Ein mechanisches Zusammenpressen des Kohlendioxidschnees zu einem Trockeneisblock mittels Kolben, wie beispielsweise in der GB 2 111 895 A1 beschrieben, ist dazu nicht erforderlich und findet bei der erfindungsgemäßen Vorrichtung nicht statt; die Erzeugung komprimierter Trockeneisblöcke ist nicht Gegenstand der vorliegenden Erfindung.

In einer weiteren Ausgestaltung der Erfindung ist die Ausgabeöffnung durch einen beweglichen Deckel verschließbar. Der Deckel wird bevorzugt gleichzeitig mit der Betätigung des Schiebeelements und/oder durch die Bewegung des durch das Schiebeelement vorgeschobenen Kohlendioxidschnees geöffnet, jedoch ist ebenfalls vorstellbar, dass Deckel und Schiebeelement unabhängig voneinander betätigbar sind.

Das Schiebeelement und/oder das Trennmesser ist/sind bevorzugt mit je einer beispielsweise elektrischen oder hydraulischen oder pneumatischen Antriebseinheit ausgerüstet, die bevorzugt unabhängig voneinander ansteuerbar sind und die die automatische Bewegung des jeweiligen Elements bewirkt. In einer weiteren Ausgestaltung der Erfindung können diese Antriebseinheiten auch mit einer Steuereinheit zusammenwirken, die die automatische Betätigung des jeweiligen Elements koordiniert. Beispielsweise ermittelt die Steuereinheit mittels geeigneter Sensoren die Bewegung von zu kühlenden Produkten oder von zu befüllenden Kältemittel-Aufnahmefächern auf einem an der Ausgabeeinheit vorbeiführendem Transportband und veranlasst die automatische Abgabe von Kohlendioxidschnee genau dann, wenn sich ein Produkt bzw. ein Kältemittel-Aufnahmefach an der Ausgabeöffnung befindet. In einer weiteren Ausgestaltung kann die Steuereinheit auch mit Sensoren zusammenwirken, die die Höhe des Kohlendioxidschnees im Vorlagebehälter detektieren und bei Erreichen einer vorgegebenen Füllhöhe des Kohlendioxidschnees im Vorlagebehälter die weitere Zufuhr von flüssigem Kohlendioxid zeitweise unterbinden.

Um eine Beeinträchtigung der Funktionsfähigkeit der erfindungsgemäßen Vorrichtung durch anbackenden Kohlendioxidschnee oder eindringende und zu Wassereis gefrierende Feuchte zu unterbinden sieht eine bevorzugte Ausgestaltung der erfindungsgemäßen Vorrichtung vor, dass der Boden und/oder die Wände des Vorlagebehälters und/oder das Schiebeelement und/oder das Trennmesser mit Heizeinrichtungen ausgerüstet sind. Für das Trennmesser und das Schiebeelement, die horizontal beweglich sind und aus dem Vorlagebehälter in eine außenseitige Betriebsposition seitlich am Vorlagebehälter verfahren werden können, ist die Heizeinrichtung bevorzugt außerhalb des Vorlagebehälters angeordnet und beheizt das jeweilige Bauteil in dessen außenseitiger Betriebsposition. Beispielsweise wird das Element dazu in eine beheizbare Aufnahmeeinrichtung hineinbewegt, die sich neben dem Vorlagebehälter befindet.

Bevorzugt findet die erfindungsgemäße Vorrichtung in einer Anordnung zur Befüllen von Kältemittel-Aufnahmefächern von Kühlbehältern mit Kohlendioxidschnee Verwendung. Die Anordnung weist eine Transporteinrichtung zum Transportieren von Kältemittel-Aufnahmefächern oder von mit Kältemittel-Aufnahmefächern ausgerüsteten Kühlbehältern, wenigstens eine erfindungsgemäße Vorrichtung sowie Fördermittel auf, mittels denen aus der Vorrichtung ausgeworfener Kohlendioxidschnee einem Kältemittel-Aufnahmefach zugeführt wird. Beispielsweise handelt es sich bei diesen Fördermitteln um eine flaches Blech oder um eine Rutsche, über die der, wie oben ausgeführt, die Form eines stabilen Schneeblocks aufweisende Kohlendioxidschnee in das Kältemittel-Aufnahmefach hineingleitet. Alternativ oder ergänzend kann hierzu auch ein Förderband zum Einsatz kommen. Mittels der Transporteinrichtung werden die Kältemittel-Aufnahmefächer nacheinander an der Ausgabeeinheit der erfindungsgemäßen Vorrichtung vorbeigeführt und mit Kohlendioxidschnee befüllt, wobei eine Steuereinheit für eine zeit- und mengengenaue Dosierung des Kohlendioxidschnees sorgt.

Um die Effizienz dieser Anordnung zu erhöhen, sind bevorzugt zwei oder mehr an erfindungsgemäßen Vorrichtungen an der Transporteinrichtung - in Transportrichtung gesehen - hintereinander angeordnet, die an einer gemeinsamen Zuleitung für flüssiges Kohlendioxid sowie an einer gemeinsamen Gasabzugsleitung angeschlossen sind. Auf diese Weise lassen sich vorgegebene Kohlendioxidmengen gleichzeitig oder zeitversetzt dosieren, indem die Betätigung der jeweiligen Ausgabeeinheit mittels einer Steuereinheit nach einem vorgegebenen Programm oder in Abhängigkeit von gemessenen Parametern geregelt wird.

Durch die Erfindung gelingt die genaue Dosierung einer abzugebenden Menge an Kohlendioxidschnee. Gleichzeitig wird im Betrieb der Vorrichtung eine Vereisung der Gasabzugsleitung vermieden und der Verlust von Kohlendioxidschnee über den abgezogenen Gasstrom minimiert. Eine erfindungsgemäße Vorrichtung ist insbesondere zur Abgabe von Dosen von 5g bis zu 1500g Kohlendioxidschnee, bevorzugt zwischen 10g und 1000g (bei der oben genannten Kombination von zwei oder mehr an der Transporteinrichtung angeordneten erfindungsgemäßen Vorrichtungen ein entsprechendes Vielfaches davon) geeignet, die in kurzen Zeitabständen von beispielsweise unter 1s auf zu behandelnde Objekte aufgetragen oder in Kältemittel-Aufnahmefächern von mobilen Kühlbehältern eingefüllt werden sollen.

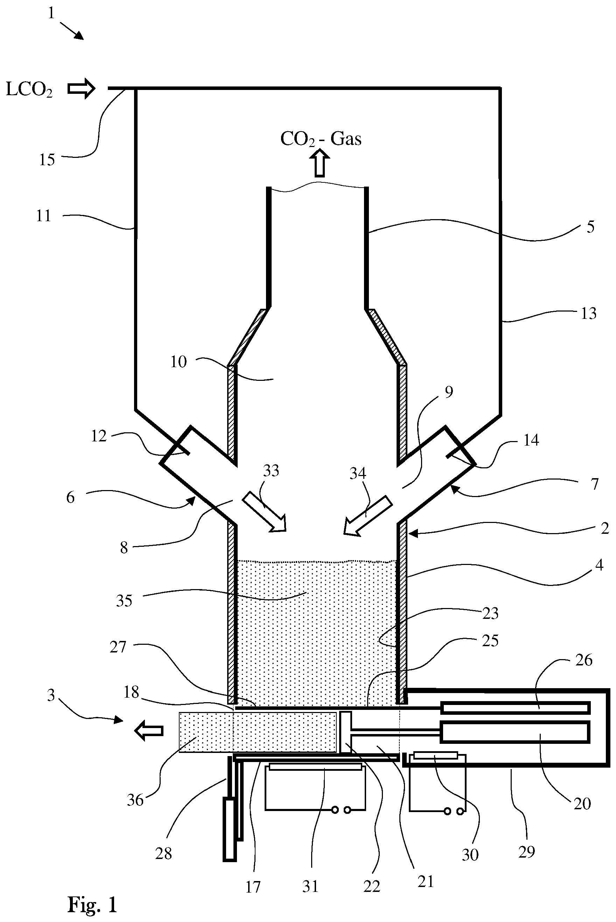

Anhand der Zeichnung soll ein Ausführungsbeispiel der Erfindung näher erläutert werden. Die einzige Zeichnung (Fig. 1) zeigt schematisch eine erfindungsgemäße Vorrichtung in einer vertikalen Schnittansicht.

Die in Fig. 1 gezeigte Vorrichtung 1 umfasst einem Vorlagebehälter 2 zum Bevorraten von Kohlendioxidschnee, und eine in einem unteren Abschnitt des Vorlagebehälters 2 angeordnete Ausgabeeinheit 3 für Kohlendioxidschnee.

Der im Wesentlichen zylindrisch, mit einem rechteckigen oder quadratischen Querschnitt aufgebaute Vorlagebehälter 2 ist mantelseitig mit einer thermischen Isolierung 4 ausgerüstet. An dem von der Ausgabeeinheit 3 entgegengesetzten, oberen Stirnseite des Vorlagebehälters 2 mündet eine Gasabzugsleitung 5 zum Abführen von Kohlendioxidgas ein.

Zum Erzeugen von Kohlendioxidschnee sind an zwei gegenüberliegenden Längsseiten des Vorlagebehälters 2 Schneehörner 6, 7 angeordnet. Die Schneehörner 6, 7 sind winklig am Vorlagebehälter 2 angestellt und münden jeweils mit einer Mündungsöffnung 8, 9 in das Innere des Vorlagebehälters 2 ein, wobei die Mündungsöffnungen 8, 9 auf gleicher Höhe und etwa 20-100 cm unterhalb der Gasabzugsleitung 5 angeordnet sind und auf diese Weise zwischen Gasabzugsleitung 5 und Mündungsöffnungen 8, 9 einen Trennabschnitt 10 im Vorlagebehälter 2 ausbilden, dessen Querschnitt dem Querschnitt des Vorlagebehälters 2 unterhalb der Mündungsöffnungen 8, 9 entspricht. In das Schneehorn 6 mündet, an seiner der Mündungsöffnung 8 entgegen gesetzten Stirnseite, eine Kohlendioxidzuleitung 11 an einer Entspannungsdüse 12 ein. In gleicher Weise mündet in das Schneehorn 7 eine Kohlendioxidzuleitung 13 an einer Entspannungsdüse 14 in das Schneehorn 7 ein. Die Kohlendioxidzuleitungen 11, 13 sind an eine gemeinsame Kohlendioxidleitung 15 angeschlossen, die mit einer hier nicht gezeigten Quelle für druckverflüssigtes Kohlendioxid, beispielsweise einem Standtank, angeschlossen ist.

Die Ausgabeeinheit 3 umfasst eine oberhalb eines Bodens 17 des Vorlagebehälters 2 seitlich angeordnete Ausgabeöffnung 18 sowie ein mit dieser zusammenwirkendes, horizontal bewegbares Schiebeelement 19, das mittels einer Antriebseinheit 20 betätigt werden kann. In der in Fig. 1 gezeigten Position ragt das Schiebeelement 19 in einen unteren, hier als Dosierabschnitt 21 bezeichneten Bereich des Innenraums des Vorlagebehälters 2 hinein; es kann jedoch mittels der Antriebseinheit 20 einerseits bis zur Ausgabeöffnung 18 vorgeschoben, andererseits bis zu einer Position zurückgefahren werden, in der seine Vorderfläche 22 mit der Innenwand 23 der entsprechenden Seitenwand des Vorlagebehälters 2 fluchtet und damit zugleich diese Seitenwand im Wesentlichen schnee- und gasdicht abschließt.

Unmittelbar über dem Schiebeelement 18 ist ein Trennmesser 25 angeordnet, das bevorzugt in seitlichen, hier nicht gezeigten Führungsschienen horizontal beweglich aufgenommen ist. Das Trennmesser 25 kann mittels einer eigenen Antriebseinheit 26 einerseits soweit vorgeschoben werden, dass sich seine Schneidkante 27 im Bereich der Ausgabeöffnung 18 befindet, andererseits soweit (im Bild nach rechts) zurückgezogen werden, dass sich das gesamte Trennmesser 25, einschließlich der Schneidkante 27, seitlich außerhalb des Vorlagebehälters 2 befindet.

Die Ausgabeöffnung 18 kann mit einer motorgetriebenen Klappe, oder, wie im hier gezeigt, mit einem motorgetriebenen Schiebeelement 28, das vertikal, beispielsweise von unten, vor die Ausgabeöffnung 18 bewegt wird, geschlossen und geöffnet werden. Die Antriebseinheiten 20, 26 sind in einer gemeinsamen Einhausung 29 angeordnet, in der auch eine elektrische Heizeinrichtung 30 vorgesehen ist. Ebenso kann der der Boden 17 des Vorlagebehälters 2 mittels einer Heizeinrichtung 31 beheizt werden.

Im Betrieb der Vorrichtung 1 sind zunächst das Schiebeelement 22 und das Trennmesser 25 in Richtung der Einhausung 29 zurückgezogen angeordnet. Der Dosierabschnitt 21 ist somit nach oben offen und mit dem übrigen Innenraum des Vorlagebehälters 2 verbunden. Zugleich befindet sich das Schiebeelement 28 in ihrem die Ausgabeöffnung 18 versperrenden Schließzustand. Über die Zuleitungen 15, 11 und 13 wird flüssiges Kohlendioxid zu den Düsen 12, 14 geleitet. Das unter Druck stehende flüssige Kohlendioxid entspannt an den Düsen 12, 13 und geht in ein Gemisch aus Kohlendioxidschnee und Kohlendioxidgas über, das aus den Mündungsöffnungen der Schneehörner 6, 7 in das Innere des Vorlagebehälters 2 einströmt. Da die beiden Ströme 33, 34 (hier angedeutet durch Pfeile) in ihren horizontalen Richtungskomponenten aufeinander zu weisen, prallen die in den Strömen 33, 34 enthaltenen Kohlendioxidpartikel aufeinander, lösen sich zum größten Teil aus dem Strom des Kohlendioxidgases und fallen im Vorlagebehälter 2 nach unten. Dort bilden sie einen Schneevorrat 35 aus. Das Schiebeelement 28 verhindert, dass Schnee über die Ausgabeöffnung 18 nach außen dringt.

Das weitgehend von den Kohlendioxidpartikeln getrennte Kohlendioxidgas strömt im Vorlagebehälter 2 aufwärts und wird über die Gasabzugsleitung 5 abgezogen. Beim Durchlaufen des Trennabschnitts 10 werden dabei im Gasstrom noch enthaltende Schneepartikel von diesem getrennt und fallen in den Schneevorrat 35 hinab.

Durch Vorschieben des Trennmessers 24 wird der innerhalb des Dosierabschnitts 21 befindliche Kohlendioxidschnee 26 vom Schneevorrat 35 abgetrennt. Durch Vorschieben des Schiebeelements 22 bei gleichzeitigem Öffnen des Schiebeelements 28 wird der Kohlendioxidschnee 36 anschließend zur Ausgabeöffnung 18 hinausgedrängt. Der Kohlendioxidschnee 36 wird dabei nicht verpresst; aufgrund von zwischen den Partikeln des Kohlendioxidschnees 36 wirkenden anziehenden Kräften weist der Kohlendioxidschnee 36 dennoch eine beträchtliche Formstabilität auf, die dazu führt, dass der Kohlendioxidschnee 36 die Gestalt eines der Form des Dosierabschnitts 21 angepassten Schneekörpers besitzt und als solcher transportiert und einer weiteren Verwendung zugeführt werden kann. Beispielsweise wird der Kohlendioxidschnee dem Kältemittel-Aufnahmefach eines hier nicht gezeigten Kühlbehälters zugeführt.

Durch die elektrischen Heizeinrichtungen 30, 31 wird verhindert, dass eindringende Feuchtigkeit zur Bildung von Wassereis führt, das die Funktionsfähigkeit der Vorrichtung 1 beeinträchtigen kann. Die Heizeinrichtung 31 beheizt dabei bei entsprechendem Bedarf den Boden 17 des Vorlagebehälters 2, während mittels der Heizeinrichtung 30 die Einhausung 29 beheizt werden kann, wodurch sowohl die Antriebsaggregate 20, 26, als auch das Schiebeelement 22 und das Trennmesser 25 vor Vereisung geschützt werden. Weiterhin wird auch (hier nicht gezeigt) der Vorlagebehälter 2 unterhalb und/oder oberhalb der Schneehörner 6, 7 beheizt, um CO₂-Schnee-Anhaftungen zu vermeiden. Mittels der Heizeinrichtungen 30, 31 können selbstverständlich auch unerwünschte Ansammlungen von Kohlendioxidschnee entfernt werden, die sich in der Einhausung 29 befinden und/oder am Boden 17 festbacken können.

Mittels der Vorrichtung 1 ist es möglich, in einer raschen Abfolge Kohlendioxidschnee einer definierten Menge zu erzeugen und über die Ausgabeeinheit 3 abzugeben. Auf diese Weise kann eine größere Anzahl von Kältemittel-Aufnahmefachen von Kühlbehältern mit Kohlendioxidschnee sehr rasch nacheinander beladen werden, die zu diesem Zweck mittels einer Transporteinheit an der Vorrichtung 1 vorbeigeführt werden. Die Frequenz der Befüllung derartiger Kältemittel-Aufnahmefache lässt sich weiter dadurch steigern, dass zwei oder mehr Vorrichtungen 1 längs der Transporteinheit vorgesehen sind, die nacheinander oder im Wechsel betätigt werden.

Die Erfindung ermöglicht eine im Vergleich zu entsprechenden Vorrichtungen aus dem Stande der Technik genaue Dosierung einer Kohlendioxidmenge und besitzt eine geringe Störanfälligkeit aufgrund von Kohlendioxid-Schneeanbackungen oder durch sich bildendes Wassereis.

### Bezugszeichenliste

- 1.: Vorrichtung
- 2.: Vorlagebehälter
- 3.: Ausgabeeinheit
- 4.: Isolierung
- 5.: Gasabzugsleitung
- 6.: Schneehorn
- 7.: Schneehorn
- 8.: Mündungsöffnung (des Schneehorns 6)
- 9.: Mündungsöffnung (des Schneehorns 7)
- 10.: Trennabschnitt
- 11.: Kohlendioxidzuleitung
- 12.: Entspannungsdüse
- 13.: Kohlendioxidzuleitung
- 14.: Entspannungsdüse
- 15.: Kohlendioxidleitung
- 16. 17.: Boden
- 18.: Ausgabeöffnung
- 19.: Schiebeelement
- 20.: Antriebseinheit
- 21.: Dosierabschnitt
- 22.: Vorderfläche
- 23.: Innenwand
- 24.: -
- 25.: Trennmesser
- 26.: Antriebseinheit
- 27.: Schneidkante
- 28.: Schiebeelement
- 29.: Einhausung
- 30.: Heizeinrichtung
- 31.: Heizeinrichtung
- 32.: -
- 33.: Strom
- 34.: Strom
- 35.: Schneevorrat
- 36.: Kohlendioxidschnee

## Patentansprüche

1. Vorrichtung zum Dosieren von Kohlendioxidschnee, mit einem Vorlagebehälter (2), in den eine Zuführung (11, 13) für Kohlendioxidschnee sowie eine Gasabzugsleitung (5) zum Abführen von Kohlendioxidgas einmünden und der mit einer Ausgabeeinheit (3) zum dosierten Abgeben von Kohlendioxidschnee ausgerüstet ist, wobei die Ausgabeeinheit (3) eine im Bereich eines Dosierabschnitts (21) des Vorlagebehälters (2) seitlich angeordnete Ausgabeöffnung (18) und ein mit der Ausgabeöffnung (18) zusammenwirkendes, horizontal bewegliches Schiebeelement (22) zum Hinausschieben von im Dosierabschnitt (21) befindlichem Kohlendioxidschnee (36) durch die Ausgabeöffnung (18) umfasst,
**dadurch gekennzeichnet,**
**dass** wenigstens zwei, jeweils an eine Zuleitung (11, 12) für flüssiges Kohlendioxid angeschlossene und an einer Mündungsöffnung (8, 9) in den Vorlagebehälter (2) einmündende Schneehörner (6, 7) vorgesehen sind, die derart angeordnet sind, dass die aus ihren Mündungsöffnungen (8, 9) in den Vorlagebehälter (2) eintretenden Ströme aus Kohlendioxidschnee und Kohlendioxidgas zumindest in einer Richtungskomponente aufeinander zu gerichtet sind, und die Gasabzugsleitung (5) oberhalb der Mündungsöffnungen (8, 9) der Schneehörner (6, 7) vom Vorlagebehälter (2) abführt und zwischen den Mündungsöffnungen (8, 9) der Schneehörner (6, 7) und der Mündung der Gasabzugsleitung (6) ein Trennabschnitt vorgesehen ist, in dem vom Gasstrom mitgerissene Schneepartikel vom Gas getrennt werden.

2. Vorrichtung nach Anspruch 1, **dadurch gekennzeichnet, dass** die Schneehörner (6, 7) in einem spitzen Winkel, mit den Mündungsöffnungen (8, 9) nach unten, am Vorlagebehälter (2) angeordnet sind.

3. Vorrichtung nach Anspruch 1 oder 2, **dadurch gekennzeichnet, dass** oberhalb des Schiebeelements (22) ein in das Innere des Vorlagebehälters (2) horizontal bewegbares Trennmesser (25) zum Abteilen eines Teilvolumens einer im Vorlagebehälter (2) befindlichen Schneemenge (35) vorgesehen sind.

4. Vorrichtung nach einem der vorhergehenden Ansprüche **dadurch gekennzeichnet**, das der Vorlagebehälter (2) einen rechteckigen oder quadratischen Querschnitt aufweist, und eine jeweils gleiche Anzahl an Schneehörnern (6, 7) in einander gegenüberliegenden vertikal verlaufenden Seitenwänden des Vorlagebehälters (2) angeordnet sind.

5. Vorrichtung nach einem der vorhergehenden Ansprüche, **dadurch gekennzeichnet, dass** der Boden (17) und/oder die Wände (23) des Vorlagebehälters (2) und/oder das Schiebeelement (22) und/oder das Trennmesser (25) mit Heizeinrichtungen (30, 31) ausgerüstet sind.

6. Anordnung zum Befüllen von Kältemittel-Aufnahmefächern mobiler Kühlbehälter mit Kohlendioxidschnee, mit einer Transporteinrichtung zum Transportieren der Kältemittel-Aufnahmefächer und mit einer an der Transporteinrichtung angeordneten Vorrichtung (1) nach einem der vorhergehenden Ansprüche und mit Führungsmitteln zum Transportieren von aus der Ausgabeeinheit (3) der Vorrichtung (1) ausgeworfenem Kohlendioxidschnee in das Kältemittel-Aufnahmefach.

7. Anordnung nach Anspruch 6, **dadurch gekennzeichnet, dass** an der Transporteinrichtung - in Laufrichtung der transportierten Kältemittel-Aufnahmefächer gesehen - eine Mehrzahl an Vorrichtungen (1) nach einem der Ansprüche 1 bis 5 hintereinander angeordnet sind, die an einer gemeinsamen Zuleitung (15) für flüssiges Kohlendioxid sowie an einer gemeinsamen Gasabzugsleitung (5) angeschlossen sind.

## Claims

1. Apparatus for metering carbon dioxide snow, having a storage container (2) into which a feed line (11, 13) for carbon dioxide snow and a gas extraction line (5) for removal of carbon dioxide gas open out and which is equipped with a discharge unit (3) for metered delivery of carbon dioxide snow, wherein the discharge unit (3) comprises a discharge opening (18), which is arranged laterally in the region of a metering section (21) of the storage container (2), and a horizontally movable sliding element (22), which interacts with the discharge opening (18) and serves for pushing out carbon dioxide snow (36) situated in the metering section (21) through the discharge opening (18),
**characterized**
**in that** provision is made of at least two snow horns (6, 7) which in each case are connected to a feed line (11, 12) for liquid carbon dioxide and open out into the storage container (2) at a mouth opening (8, 9) and which are arranged in such a way that the streams of carbon dioxide snow and carbon dioxide gas entering the storage container (2) from their mouth openings (8, 9) are directed toward one another at least in terms of a directional component, and the gas extraction line (5) leads away from the storage container (2) above the mouth openings (8, 9) of the snow horns (6, 7) and, between the mouth openings (8, 9) of the snow horns (6, 7) and the mouth of the gas extraction line (6), provision is made of a separating section in which snow particles entrained by the gas stream are separated from the gas.

2. Apparatus according to Claim 1, **characterized in that** the snow horns (6, 7) are arranged on the storage container (2) at an acute angle, with the mouth openings (8, 9) toward the bottom.

3. Apparatus according to Claim 1 or 2, **characterized in that**, above the sliding element (22), provision is made of a separating cutter (25) which can be moved horizontally into the interior of the storage container (2) and which serves for partitioning of a sub-volume of a snow quantity (35) which is situated in the storage container (2).

4. Apparatus according to one of the preceding claims, **characterized in that** the storage container (2) has a rectangular or square cross section, and an in each case equal number of snow horns (6, 7) are arranged in mutually opposite, vertically extending side walls of the storage container (2).

5. Apparatus according to one of the preceding claims, **characterized in that** the base (17) and/or the walls (23) of the storage container (2) and/or the sliding element (22) and/or the separating cutter (25) are equipped with heating devices (30, 31).

6. Arrangement for filling refrigerant-receiving compartments of mobile cooling containers with carbon dioxide snow, having a transport device for transporting the refrigerant-receiving compartments, and having an apparatus (1) according to one of the preceding claims which is arranged at the transport device, and having guide means for transporting into the refrigerant-receiving compartment carbon dioxide snow expelled from the discharge unit (3) of the apparatus (1).

7. Arrangement according to Claim 6, **characterized in that**, at the transport device, a plurality of apparatuses (1) according to one of Claims 1 to 5 are arranged one behind the other as seen in the running direction of the transported refrigerant-receiving compartments, which apparatuses are connected to a common feed line (15) for liquid carbon dioxide and to a common gas extraction line (5).

## Revendications

1. Dispositif de dosage de neige carbonique, avec un récipient collecteur (2) dans lequel débouchent une amenée (11, 13) pour de la neige carbonique ainsi qu'une conduite d'évacuation de gaz (5) pour évacuer du gaz carbonique, et qui est équipé d'une unité de déchargement (3) pour distribuer de manière dosée de la neige carbonique, l'unité de déchargement (3) comprenant une ouverture de déchargement (18) agencée latéralement dans la zone d'une section de dosage (21) du récipient collecteur (2) et un élément de poussée (22) mobile horizontalement, coopérant avec l'ouverture de déchargement (18), pour pousser vers l'extérieur, à travers l'ouverture de déchargement (18), de la neige carbonique (36) se trouvant dans la section de dosage (21),
**caractérisé**
**en ce qu'**il est prévu au moins deux cornets à neige (6, 7) raccordés chacun à une conduite d'amenée (11, 12) pour du dioxyde de carbone liquide et débouchant au niveau d'une ouverture d'embouchure (8, 9) dans le récipient collecteur (2), lesquels sont agencés de telle sorte que les flux de neige carbonique et de dioxyde de carbone gazeux entrant par leurs ouvertures d'embouchure (8, 9) dans le récipient collecteur (2) sont dirigés l'un vers l'autre au moins dans une composante directionnelle, et la conduite d'évacuation de gaz (5) s'éloigne du récipient collecteur (2) au-dessus des ouvertures d'embouchure (8, 9) des cornets à neige (6, 7), et entre les ouvertures d'embouchure (8, 9) des cornets à neige (6, 7) et l'embouchure de la conduite d'évacuation de gaz (6), il est prévu une section de séparation dans laquelle des particules de neige entraînées par le flux de gaz sont séparées du gaz.

2. Dispositif selon la revendication 1, **caractérisé en ce que** les cornets à neige (6, 7) sont agencés sur le récipient collecteur (2) selon un angle aigu, avec les ouvertures d'embouchure (8, 9) vers le bas.

3. Dispositif selon la revendication 1 ou 2, **caractérisé en ce qu'**il est prévu, au-dessus de l'élément de poussée (22), une lame de séparation (25) pouvant être déplacée horizontalement à l'intérieur du récipient collecteur (2) pour diviser un volume partiel d'une quantité de neige (35) se trouvant dans le récipient collecteur (2).

4. Dispositif selon l'une quelconque des revendications précédentes, **caractérisé en ce que** le récipient collecteur (2) présente une section transversale rectangulaire ou carrée, et **en ce qu'**un nombre égal de cornets à neige (6, 7) est agencé dans des parois latérales opposées s'étendant verticalement du récipient collecteur (2).

5. Dispositif selon l'une quelconque des revendications précédentes, **caractérisé en ce que** le fond (17) et/ou les parois (23) du récipient collecteur (2) et/ou l'élément de poussée (22) et/ou la lame de séparation (25) sont équipés d'appareils de chauffage (30, 31).

6. Agencement pour remplir de neige carbonique des compartiments de réception de réfrigérant de récipients frigorifiques mobiles, avec un appareil de transport pour transporter les compartiments de réception de réfrigérant et avec un dispositif (1) selon l'une quelconque des revendications précédentes agencé sur l'appareil de transport et avec des moyens de guidage pour transporter la neige carbonique éjectée de l'unité de déchargement (3) du dispositif (1) dans le compartiment de réception de réfrigérant.

7. Agencement selon la revendication 6, **caractérisé en ce qu'**une pluralité de dispositifs (1) selon l'une quelconque des revendications 1 à 5 sont agencés les uns derrière les autres sur l'appareil de transport - vu dans la direction de déplacement des compartiments de réception de réfrigérant transportés - qui sont raccordés à une conduite d'amenée (15) commune pour du dioxyde de carbone liquide ainsi qu'à une conduite d'évacuation de gaz (5) commune.
